# EUROPÄISCHE PATENTANMELDUNG

(11) **EP 4 116 239 A1**
(43) Veröffentlichungstag der Anmeldung: **11.01.2023**
(21) Anmeldenummer: 22183905.3
(22) Anmeldetag: 08.07.2022
(51) Int. Cl.: B65G 47/244, B65G 47/84

(54) **VERFAHREN UND VORRICHTUNG ZUR AUSRICHTUNG VON PRODUKTEN**

(30) Priorität: 08.07.2021 DE 102021117646
(71) Anmelder: THEEGARTEN-PACTEC GMBH & CO. KG, 01237 Dresden (DE)
(72) Erfinder: FUCHS, Ingolf, 01099 Dresden (DE); OEHLERT, Volker, 01809 Dohna/Röhrsdorf (DE)
(74) Vertreter: Grünecker Patent- und Rechtsanwälte PartG mbB

(57) **Zusammenfassung**

Die vorliegende Erfindung betrifft ein Verfahren und eine Vorrichtung zur Ausrichtung von Produkten (P), die in wenigstens einem Produktstrom entlang einer Bewegungsbahn (B) bewegt werden. Um auch bei hohen Durchlaufleistungen eine einfache und zuverlässige Ausrichtung der Produkte zu ermöglichen, werden die Produkte (P) mit der Ausrichteinrichtung (2) in wenigstens einem Produktstrom entlang einer Bewegungsbahn (B) über ein quer dazu laufendes Transportband (3) bewegt, sodass ein Drehmoment (M) auf die Produkte (2) wirkt und sich die Ausrichtung der Produkte (P) bezüglich der Bewegungsbahn (B) verändert.

## Beschreibung

Die vorliegende Erfindung betrifft ein Verfahren und eine Vorrichtung zur Ausrichtung von Produkten, die in wenigstens einem Produktstrom entlang einer Bewegungsbahn bewegt werden, insbesondere ein Verfahren und eine Vorrichtung zur Ausrichtung von zu verpackenden Produkten in der Produktzuführung einer Verpackungsmaschine.

In der Verpackungstechnik besteht eine Notwendigkeit, kleinstückige und längliche Produkte wie Schokoladenstücke oder Napolitains vor dem Verpacken von einer Längslage in eine Querlage zu drehen, wodurch sie optimal für einen nachfolgenden Verpackungsablauf positioniert werden. In einer Querlage können die zu verpackenden Produkte ideal mit einem Packmittelschlauch umwickelt werden.

Es ist bekannt, Produkte in hoher Geschwindigkeit auf Zuführbändern an Führungselementen auszurichten. Derartige Führungselemente sind feststehende Führungsschienen als auch mitbewegte Bänder, um die Relativgeschwindigkeit zwischen Produkt und Führungselement variieren zu können.

Bisher bekannte Lösungen basierten darauf, dass Produkte beispielsweise auf einen Drehteller (horizontal angeordneter Kopf) übergeben wurden. Ein derartiger Drehteller ist mit einer Vielzahl von Stationen ausgestattet, sodass jeder Station ein jeweiliges Produkt zugeordnet wird. Die einzelnen Stationen sind wiederum in sich drehbar im Drehteller gelagert, wodurch eine Relativbewegung zum Drehteller ermöglicht wird. Hierdurch können die Produkte innerhalb eines entsprechenden Winkelbereichs wiederum um sich selbst um einen bestimmten Winkel gedreht werden. Dadurch können die Produkte z.B. von Längs- in Querlage oder auch umgekehrt gebracht werden. Die Produkte werden dabei beispielsweise über Vakuum auf der jeweiligen Station fixiert.

Es sind aber auch mechanische Greifer bekannt, um eine derartige Drehbewegung zu gewährleisten, z.B. gemäß der WO 2012/101589 A1.

Es sind aber auch Eckumsetzer nach einem ähnlichen Prinzip bekannt, bei dem Produkte von oben angesaugt werden, anschließend gedreht und dann in eine Abgabestrecke übergeben werden.

Wesentliche Nachteile bekannter Lösungen bestehen einerseits in der Komplexität der Systeme. Es sind überlagerte Bewegungen zu realisieren, um die notwendige Produktdrehung zu ermöglichen. Gleichfalls müssen die Produkte individuell fixiert werden. Dies geschieht entweder durch mechanische Greifer, die aufwändig gestaltet und auch hygienisch bedenklich einzuschätzen sind. Die Verwendung von Vakuum reduziert zwar den mechanischen Aufwand, jedoch gestaltet sich die Vakuumführung incl. der Abdichtung als auch nicht ganz einfach. Auch hier gibt es aus hygienischer Sicht Bedenken, da die Saugkanäle oftmals schwer zu reinigen sind. Letztlich ist auch ein nicht unerheblicher Energieverbrauch zur Vakuumerzeugung nachteilig.

Die Produktdrehung über einen horizontal angeordneten Kopf führt zudem auch zu einer winkligen Anordnung von Produkteinlauf- zur Auslaufseite. Dies ist bei Linienprojektierungen nachteilig, da ein Inline-Durchlauf oft bevorzugt wird.

Aus der WO 2012/101589 A1 ist auch leicht erkennbar, dass derartig komplexe über dem Produktdurchlauf angeordnete Systeme insofern nachteilig sind, da sie die Zugänglichkeit zum Prozess deutlich verschlechtern.

Einfachere Systeme, welche Produkte z.B. aus einem Stau heraus quer in 90°-Richtung abschieben, sind sehr leistungseinschränkend und mit hoher Produktbelastung verbunden.

Der vorliegenden Erfindung liegt daher die Aufgabe zugrunde, die aufgeführten Nachteile zu beseitigen und eine technisch leicht umzusetzende Lösung zur Ausrichtung von Produkten mit einer sehr hohen Durchlaufleistung bereitzustellen.

Zur Lösung dieser Aufgabe stellt die vorliegende Erfindung das Verfahren nach Anspruch 1 und die Vorrichtung nach Anspruch 10 bereit.

Das erfindungsgemäße Verfahren dient zur Ausrichtung von Produkten, die in wenigstens einem Produktstrom entlang einer Bewegungsbahn bewegt werden. Erfindungsgemäß werden die Produkte mit einer (sich bewegenden, d.h. aktiven) Ausrichteinrichtung in wenigstens einem Produktstrom entlang einer Bewegungsbahn über ein quer dazu laufendes Transportband bewegt, sodass ein Drehmoment auf die Produkte wirkt und sich die Ausrichtung der Produkte bezüglich der Bewegungsbahn verändert.

Das erfindungsgemäße Verfahren ist insbesondere in einem kontinuierlichen Verpackungsverfahren im Rahmen der Produktzuführung umsetzbar. Es gibt keine Einschränkungen hinsichtlich der Produkthöhe (z.B. flache Napolitains) als auch der Form der oberen Deckfläche der Produkte (z.B. unebene Oberfläche).

Nach der erfindungsgemäßen Lösung sind sowohl einbahnige als auch mehrbahnige Produktzuführungen möglich. Bei herkömmlichen Lösungen waren mehrbahnige Ausführungen mit einem erheblichen technischen Aufwand verbunden und ggf. nur unter funktionalen Kompromissen zu verwirklichen.

Vorzugsweise bewirken (ausschließlich) die Ausrichteinrichtung sowie das Transportband die Bewegung des Produkts entlang der Bewegungsbahn und dessen Ausrichtung bezüglich der Bewegungsbahn. Dabei bestehen u.a. in Abhängigkeit von der Form und der gewünschten Ausrichtung des Produkts viele Freiheiten in der technischen Umsetzung. So kann die Ausrichteinrichtung beispielsweise das Produkt entlang der Bewegungsbahn fördern und auf dem Transportband vor sich herschieben. Das Transportband übt dabei eine Querkraft auf das Produkt aus, um selbiges zu drehen. Es ist aber auch möglich, dass das Transportband das Produkt im Wesentlichen entlang der Bewegungsbahn fördert und auf die vorauseilende Ausrichteinrichtung aufschiebt, sodass das Produkt bei Kontakt mit der Ausrichteinrichtung quer zur Laufrichtung des Transportbandes bewegt und gedreht wird.

Vorteilhafte Weiterbildungen der Erfindung sind Gegenstände der abhängigen Ansprüche.

Es kann von Vorteil sein, wenn die Produkte in wenigstens zwei, insbesondere parallelen, Produktströmen über das Transportband bewegt werden. So wird dasselbe Transportband genutzt, um die Produkte in mehreren parallelen Produktströmen auszurichten. Mit jedem weiteren Produktstrom multipliziert sich die Durchlaufleistung ohne entsprechende Erhöhung des technischen Aufwands.

Es kann sich als nützlich erweisen, wenn die Produkte im Produktstrom nacheinander einzeln auf das Transportband aufgebracht werden, sodass die Produkte in Kontakt mit dem Transportband gelangen und von diesem mit einer Reibkraft quer zu der Bewegungsbahn beaufschlagt werden. So wird die Querkraftkomponente zur Erzeugung des Drehmoments vom Transportband bodenseitig auf das Produkt aufgebracht. Dadurch können auch Produkte ausgerichtet werden, die mit mechanischen Greifern oder Saugvorrichtungen von oben nicht gut erfassbar sind.

Es kann sinnvoll sein, wenn die Ausrichteinrichtung jedes Produkt beim Überqueren des Transportbandes an einem vom Schwerpunkt des Produkts versetzen Abschnitt, insbesondere an einer (hinteren oder vorderen) Ecke oder Kante des Produkts, quer zu der Bewegungsbahn abstützt, sodass sich das Produkt beim Überqueren des Transportbandes um diesen abgestützten Abschnitt dreht und ggf. im Anschluss an die Drehung quer zu der Bewegungsbahn bis in eine Anschlagposition verschoben wird. Dadurch lasst sich mit geringem Aufwand eine optimale Ausrichtung der Produkte erreichen.

Es kann sich als hilfreich erweisen, wenn jedes Produkt im Vergleich zu dem Zustand vor Überqueren des Transportbandes mit einer bezüglich der Bewegungsbahn veränderten Ausrichtung an eine nachgelagerte Transporteinrichtung übergeben wird, wobei vorzugsweise eine Längsachse des Produkts zunächst entlang der Bewegungsbahn ausgerichtet ist und/oder beim Überqueren des Transportbandes quer, insbesondere senkrecht, zur Bewegungsbahn ausgerichtet wird. Dadurch können die Produkte für einen anschließenden Verpackungsprozess optimal positioniert werden.

Es kann nützlich sein, wenn die Ausrichteinrichtung eine maximale Drehung und/oder Verschiebung jedes Produkts beim Überqueren des Transportbandes begrenzt. Dadurch kann auch bei hohen Durchlaufleistungen eine gewünschte Produktausrichtung zuverlässig erreicht werden.

Es kann sich als vorteilhaft erweisen, wenn jedes Produkt beim Überqueren des Transportbandes um eine senkrecht zur Transportfläche des Transportbandes ausgerichtete Achse gedreht wird, vorzugsweise um 90°. Dadurch können insbesondere längliche Produkte für einen anschließenden Verpackungsprozess optimal positioniert werden.

Es kann von Vorteil sein, wenn die Produkte eine ebene, vorzugsweise polygonale, insbesondere rechteckige Grundfläche aufweisen, wobei die Produkte bevorzugt quaderförmig ausgebildet sind. Derartige Produkte sind im Süßwarenbereich geläufig und ermöglichen einen sicheren Stand auf einer ebenen Unterlage sowie eine besonders konturnahe Verpackung. Solche Produkte liegen stabil auf einer ebenen Unterlage auf und sind mit dem erfindungsgemäßen Verfahren ideal ausrichtbar.

Es kann sich als sinnvoll erweisen, wenn eine Geschwindigkeit der Ausrichteinrichtung entlang der Bewegungsbahn größer oder kleiner ist als ein Geschwindigkeitsanteil des Transportbandes entlang der Bewegungsbahn. Dadurch kann sichergestellt werden, dass die Produkte im Wirkbereich der Ausrichteinrichtung stets mit dieser in Eingriff gehalten werden. Wenn die Ausrichteinrichtung das Produkt vor sich herschiebt, ist die Geschwindigkeit der Ausrichteinrichtung entlang der Bewegungsbahn vorzugsweise größer als der Geschwindigkeitsanteil des Transportbandes entlang der Bewegungsbahn. Die Ausrichteinrichtung holt das Produkt bzw. das entlang der Bewegungsbahn vordere Produktende sozusagen ein. Wenn das Transportband die Produkte auf eine vorauseilende Ausrichteinheit der Ausrichteinrichtung aufschiebt, ist die Geschwindigkeit der Ausrichteinrichtung entlang der Bewegungsbahn vorzugsweise kleiner als der Geschwindigkeitsanteil des Transportbandes entlang der Bewegungsbahn. Dabei stellt die Ausrichteinrichtung für das auf dem Transportband geförderte Produkt ein sich quer dazu bewegendes Hindernis dar, welches so konfiguriert ist, dass das Produkt entlang der Bewegungsbahn bewegt und in der gewünschten Position ausrichtet wird.

Ein weiterer, unabhängiger Aspekt der vorliegenden Erfindung betrifft eine Vorrichtung zur Ausrichtung von Produkten, umfassend eine Ausrichteinrichtung und ein quer dazu laufendes Transportband, wobei die Ausrichteinrichtung ausgebildet ist, um die Produkte in wenigstens einem Produktstrom entlang einer Bewegungsbahn über das quer dazu laufende Transportband zu bewegen, sodass ein Drehmoment auf die Produkte wirkt und sich die Ausrichtung der Produkte bezüglich der Bewegungsbahn verändert.

Es ergeben sich die vorstehend genannten Vorteile.

Es kann nützlich sein, wenn die Ausrichteinrichtung eine Vielzahl von entlang der Bewegungsbahn bewegbaren Ausrichteinheiten aufweist, um die Produkte im Produktstrom (bzw. in jedem Produktstrom) nacheinander einzeln über das Transportband zu bewegen.

Es kann sich als praktisch erweisen, wenn jede Ausrichteinheit ausgebildet ist, um Produkte aus verschiedenen Produktströmen gleichzeitig entlang der Bewegungsbahn zu bewegen.

Es kann von Nutzen sein, wenn jede Ausrichteinheit wenigstens einen der folgenden Abschnitte aufweist:
- Einen Aufnahmeabschnitt, um ein Produkt von einer vorgelagerten Zuführeinrichtung in einer Aufnahmeposition aufzunehmen.
- Einen Abstützabschnitt, um ein Produkt beim Überqueren des Transportbandes an einem vom Schwerpunkt des Produkts versetzen Abschnitt, insbesondere an einer (hinteren) Ecke oder Kante des Produkts, quer zu der Bewegungsbahn abzustützen, sodass sich das Produkt beim Überqueren des Transportbandes (ausgehend von der Aufnahmeposition) um diesen abgestützten Abschnitt dreht und ggf. quer zu der Bewegungsbahn bis in eine Anschlagposition verschoben wird.
- Einen Anlageabschnitt, an welchem das Produkt nach abgeschlossener Drehung anliegen kann und quer zu der Bewegungsbahn bis in eine Anschlagposition verschoben werden kann.
- Einen Anschlag, um eine Verschiebung des Produkts quer zu der Bewegungsbahn (in der Anschlagposition) zu begrenzen.

Es kann aber auch von Vorteil sein, wenn ein Winkel zwischen einer Laufrichtung des Transportbandes und der Bewegungsbahn und/oder ein Verhältnis zwischen der Geschwindigkeit des Transportbandes und der Fördergeschwindigkeit der Ausrichteinrichtung verstellbar ist/sind.

Es kann sich als praktisch erweisen, wenn die Ausrichteinheiten kontinuierlich entlang einer umlaufenden Führungsbahn, die abschnittsweise (vorzugsweise oberhalb des Transportbandes) entlang bzw. parallel zur Bewegungsbahn verläuft, bewegbar sind. Dadurch können die Produkte entlang der Bewegungsbahn auf einfache Weise angetrieben werden.

Weitere vorteilhafte Weiterbildungen der Erfindung ergeben sich durch Kombinationen der Merkmale, die in den Ansprüchen, der Beschreibung und den Figuren offenbart sind.

### Begriffe und Definitionen

Das Merkmal, dass das Transportband quer zu der Bewegungsbahn ausgerichtet ist, soll bedeuten, dass (bei Projektion auf die Transportfläche des Transportbandes) ein Winkel zwischen der Laufrichtung des Transportbandes und der Bewegungsbahn größer als 0° ist und vorzugsweise 90° nicht übersteigt.

"Überqueren des Transportbandes" bedeutet nicht zwingend, dass die Produkte die gesamte Breite das Transportband passieren müssen. Es ist ausreichend, wenn die Produkte zumindest über einen Teil der Breite des Transportbands quer zu dessen Laufrichtung bewegt werden.

### Kurze Beschreibung der Figuren

Es zeigen:

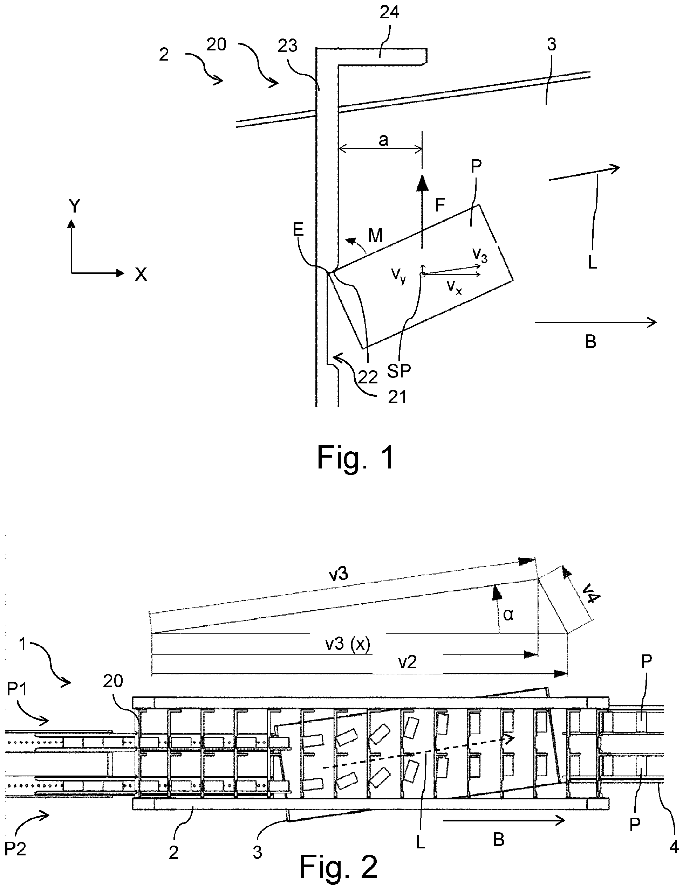

Fig. 1 eine schematische Draufsicht eines Produkts, das im Einklang mit dem erfindungsgemäßen Verfahren mit einer Ausrichteinrichtung in einem Produktstrom entlang einer Bewegungsbahn über ein quer dazu laufendes Transportband bewegt wird, wobei ein Drehmoment auf das Produkt wirkt, das die Ausrichtung des Produkts bezüglich der Bewegungsbahn verändert.
Fig. 2 eine schematische Draufsicht einer erfindungsgemäßen Vorrichtung, umfassend eine Ausrichteinrichtung und ein quer dazu laufendes Transportband, wobei die Ausrichteinrichtung die Produkte kontinuierlich in zwei parallelen Produktströmen entlang einer Bewegungsbahn über dasselbe quer dazu laufende Transportband bewegt, wobei ein Drehmoment auf die Produkte wirkt, das die Ausrichtung der Produkte bezüglich der Bewegungsbahn verändert.

### Detaillierte Beschreibung der bevorzugten Ausführungsbeispiele

Der Aufbau der erfindungsgemäßen Vorrichtung 1 wird nachstehend mit Bezug auf die Figuren im Detail beschrieben. Die Funktionsweise dieser Vorrichtung und die Durchführung des erfindungsgemäßen Verfahrens werden im Anschluss daran erläutert.

Die erfindungsgemäße Vorrichtung 1 dient zur Ausrichtung von Produkten P nach dem erfindungsgemäßen Verfahren und umfasst eine Ausrichteinrichtung 2 sowie ein quer dazu laufendes Transportband 3. Die Ausrichteinrichtung 2 ist ausgebildet, um die Produkte P in zwei parallelen Produktströmen P1, P2 nacheinander einzeln entlang einer Bewegungsbahn B über das Transportband 3 zu bewegen.

Im vorliegenden Ausführungsbeispiel ist die Ausrichteinrichtung 2 ein umlaufendes Mitnehmerband. Das Mitnehmerband ist in geringfügigem Abstand oberhalb des Transportbandes 3 angeordnet, idealerweise, ohne das Transportband 3 zu berühren. Die Ausrichteinrichtung 2 umfasst eine Vielzahl von Ausrichteinheiten 20, die ihrerseits auf einer umlaufenden Führungsbahn bewegbar sind. Auf der Unterseite der Ausrichteinrichtung 2 laufen die Ausrichteinheiten 20 entlang der Bewegungsbahn B, auf der Oberseite der Ausrichteinrichtung 2 in entgegengesetzter Richtung dazu.

Jede Ausrichteinheit 20 fördert zwei Produkte parallel, d.h. jeweils ein Produkt P aus beiden Produktströmen P1, P2 gleichzeitig. Im vorliegenden Ausführungsbeispiel schieben bzw. treiben die Ausrichteinheiten 20 die Produkte P vor sich her, um diese entlang der Bewegungsbahn B über das Transportband 3 zu befördern. Bei Überquerung des Transportbandes 3 kommen die - hier rechteckigen - Grundflächen bzw. Unterseiten der Produkte P in Reibkontakt mit der Oberseite des Transportbandes 3. Dadurch wirkt ein Drehmoment M auf die Produkte P ein, welches die Ausrichtung der Produkte P bezüglich der Bewegungsbahn B verändert.

In einer nicht dargestellten Abwandlung dieses Ausführungsbeispiels schiebt das Transportband 3 die Produkte P auf die mit etwas geringerer Geschwindigkeit vorauseilenden Ausrichteinheiten 20 auf. Jede Ausrichteinheit 20 stellt somit ein sich entlang der Bewegungsbahn B und quer zum Transportband 3 bewegendes Hindernis dar und übt ein Drehmoment M auf eines der Produkte P aus. Dadurch wird die Ausrichtung des Produkts P bezüglich der Bewegungsbahn B verändert.

Während das Transportband 3 eine Kraft auf die Grundflächen bzw. Unterseiten eines der Produkte P ausübt, wirkt die Ausrichteinheit 20 auf eine andere Produktfläche ein, insbesondere auf eine Mantelfläche des Produkts P. Durch die Formgebung der Ausrichteinheit 20 können der Ort und die Richtung der auf das Produkt P einwirkenden Kraft gezielt bestimmt werden.

Jede Ausrichteinheit 20 ist näherungsweise gabelförmig ausgebildet und weist zwei Zacken mit danebenliegenden Aufnahmen auf. Die Zacken sind entlang der Bewegungsbahn B in Förderrichtung nach vorne ausgerichtet und dienen als Begrenzungen, um die zu bewegenden Produkte zu positionieren bzw. deren Bewegungen quer zur Bewegungsbahn B einzuschränken.

Jede Ausrichteinheit 20 umfasst für jedes zu fördernde Produkt einen Aufnahmeabschnitt 21, einen Abstützabschnitt 22, einen Anlageabschnitt 23 und einen Anschlag 24.

Im Aufnahmeabschnitt 21 wird das Produkt P von einer vorgelagerten Zuführeinrichtung in einer Aufnahmeposition aufgenommen. Dieser senkrecht zur Bewegungsbahn B ausgerichtete Aufnahmeabschnitt 21 ist auf die Produktbreite abgestimmt und quer zu der Bewegungsbahn B von einem schulterförmigen, abgerundeten Abstützabschnitt 22 begrenzt.

Dieser Abstützabschnitt 22 springt zunächst entlang der Bewegungsbahn B über den Aufnahmeabschnitt 21 hervor und geht dann in einen senkrecht zur Bewegungsbahn B ausgerichteten Anlageabschnitt 23 über. Der Abstützabschnitt 22 hat die Funktion, das geförderte Produkt P beim Überqueren des Transportbandes 3 an einem vom Schwerpunkt SP des Produkts P versetzten Abschnitt E, insbesondere an einer Ecke oder Kante des Produkts P, quer zu der Bewegungsbahn B abzustützen.

Beim Überqueren des Transportbandes 3 wird das Produkt P von der Ausrichteinheit 20 von hinten entlang der Bewegungsbahn B geschoben und angetrieben. Die Ausrichteinheit 20 wirkt dabei auf eine Mantelfläche des Produkts P ein. Gleichzeitig übt das Transportband 3 auf die Grundfläche bzw. Unterseite des Produkts P eine Reibkraft aus und erzeugt eine Querkraftkomponente F, die quer zu der Bewegungsbahn B wirkt. Da der Abstützabschnitt 22 das geförderte Produkt P am hinteren Ende quer zu der Bewegungsbahn B abstützt, kann das hintere Ende des Produkts P nicht quer zu der Bewegungsbahn B ausweichen. Das vordere Ende des Produkts P weicht hingehend quer zu der Bewegungsbahn B aus. Da die Fördergeschwindigkeit der Ausrichteinrichtung 2 bzw. Ausrichteinheit 20 größer ist als der entlang der Bewegungsbahn B wirkende Anteil der Geschwindigkeit des Transportbandes 3, dreht sich das Produkt P beim Überqueren des Transportbandes 3 um diesen abgestützten Abschnitt E, bis das Produkt mit der dann hinteren Längskante am Anlageabschnitt 23 anliegt. Die Ausrichteinheit 20 holt sozusagen das entlang der Bewegungsbahn B führende Produktende ein.

Im Anschluss an die Drehung wird das Produkt an dem Anlageabschnitt 23 anliegend quer zu der Bewegungsbahn B bis in eine Anschlagposition verschoben. Der entlang der Bewegungsbahn B über den Anlageabschnitt 23 vorspringende Anschlag 24 begrenzt, wie in Fig. 2 dargestellt, eine Verschiebung des Produkts P quer zu der Bewegungsbahn B in der Anschlagposition.

Ein Winkel α zwischen einer Laufrichtung L des Transportbandes 3 und der Bewegungsbahn B sowie ein Verhältnis zwischen der Geschwindigkeit des Transportbandes 3 und der Fördergeschwindigkeit der Ausrichteinrichtung 2 sind vorzugsweise verstellbar. Vorzugsweise liegt der Winkel α im Bereich von 1 bis 90°, bevorzugt im Bereich von 5 bis 30°, besonders bevorzugt im Bereich von 10 bis 20°.

Die vorliegende Erfindung und deren Wirkungen und Vorteile lassen sich in anderen Worten wie folgt zusammenfassen:
Der Grundgedanke der Erfindung besteht darin, dass die über das Transportband 3 geförderten Produkte P unter Einwirkung einer Quer-Bewegungskomponente eine Drehbewegung erfahren, wenn sie an einer Produktecke E abgestützt werden.

Ursache hierfür ist die Wirkung einer Querkraftkomponente F durch die Produktmasse, einer Reibung zwischen dem Produkt P und dem Transportband 3 sowie der eingeleiteten Querbewegung v_{y} des Transportbandes 3 auf das Produkt P. Die Wirkung dieser Kraftkomponente verläuft über den Schwerpunkt SP des Produktes P. Wird nun ein Hindernis in Gestalt des Abstützabschnitts 22 in einem Abstand a zur Kraftwirkung positioniert, so entsteht aus der Kraftkomponente F ein Drehmoment M um den Eckpunkt E des Produkts P. Dadurch wird das Produkt P um seinen hinteren Eckpunkt E gedreht. Dies erfolgt so lange, bis das Produkt P nicht mehr am Abstützabschnitts 22 abgestützt wird und durch Anlage am Punkt E ein Drehmoment M erhält.

Durch eine nachfolgend flächige Anlage am Anlageabschnitt 23 nimmt das einzelne Produkt P anschließend eine stabile Lage ein ohne dass es weitergedreht wird. In dieser Position ist die Längsachse des Produkts P quer bzw. senkrecht zur Bewegungsbahn B ausgerichtet. Eine seitliche Begrenzung bzw. der Anschlag 24 sorgt dafür, dass das Produkt P die durch die Ausrichteinheit 20 vorgegebene Spur nicht unkontrolliert seitlich verlässt.

In der vorliegenden Ausführung wird das Drehen der einzelnen Produkte P durch ein über den Produktströmen P1, P2 angeordnetes, kontinuierlich bewegtes Mitnehmerband als Ausrichteinrichtung 2 initiiert. An dem Mitnehmerband 2 sind entsprechend mit einer jeweiligen Ecke "E" ausgeformte Ausrichteinheiten 20 bzw. Mitnehmer befestigt. Unter dem Mitnehmerband 2 ist das Transportband 3 angeordnet, dessen Laufrichtung L um einen Winkel α quer zu der Bewegungsbahn B der Ausrichteinheiten 20 und Produkte P ausgerichtet ist. Durch eine Veränderung des Winkels α und/oder durch Variation der Geschwindigkeit v3 des Transportbandes 3 kann der Vektor der Relativbewegung v4 in Betrag und Richtung gezielt verändert werden, wodurch die Zügigkeit des Drehens der Produkte P beeinflusst wird und kann dadurch optimal an die Produktgeometrie und die Reibungsverhältnisse angepasst werden. Gleichfalls befinden sich die Produkte P sicher im Kontakt mit den Mitnehmern, solange v2 > v3(x) ist.

Damit ist es möglich, Produkte P auch mit sehr hoher Geschwindigkeit von 75m/min und mehr zu drehen. Je höher die Produktgeschwindigkeit ist, desto kleiner wird der Winkel α gewählt. Voraussetzung ist, dass eine entsprechend ausreichende Strecke zum Drehen zur Verfügung steht.

Das beschriebene System funktioniert für bereits vereinzelte Produkte P, die in annähernd regelmäßiger Folge liegen. Dies kann beispielsweise in verkoppelter Funktionalität bekannter Produktvereinzelungen ausgeführt werden, bei denen bereits eine Ausrichteinrichtung (z.B. ein Mitnehmerband) zur Produktpositionierung zum Einsatz kommt. Die beabstandeten Produkte P werden jeweils auf der Einlaufseite zwischen den Ausrichteinheiten 20 (Mitnehmer) positioniert. Aufgrund einer höheren Geschwindigkeit v2 der Ausrichteinheiten 20 gegenüber der Geschwindigkeitskomponente v3(x) des Transportbandes 3 entlang der Bewegungsbahn B holen die Ausrichteinheiten 20 (Mitnehmer) die davor positionierten Produkte P ein, bis diese an der Ausrichteinheit 20 (Mitnehmer) anliegen. Von da an haben die Produkte P die gleiche Geschwindigkeit (v2) wie die Ausrichteinheiten 20 (Mitnehmer). Die Führung der Produkte P erfolgt hierbei durch seitliche Führungen so, dass die einzelnen Produkte P jeweils nah an der hinteren Ecke "E" an dem schulterförmigen Abstützabschnitt 22 der Ausrichteinheit 20 (Mitnehmer) anliegen. Damit ist eine Voraussetzung für das Drehen der Produkte P geschaffen.

Anschließend werden die Produkte P durch die Ausrichteinheiten 20 (Mitnehmer) auf das um einen Winkel α quer zu der Bewegungsbahn (B) laufende Transportband 3 geschoben. Von da an wirkt dann die Quer-Bewegungskomponente, durch die die Drehung der Produkte P eingeleitet und durchgeführt wird.

Nach vollzogener Drehung werden die in regelmäßiger Folge gedreht liegenden Produkte P durch die Ausrichteinrichtung 2 an eine nachfolgendes Transporteinrichtung 4 übergeben.

Eine derartige Dreheinrichtung wird vorzugsweise zum Drehen von Produkten P von einer Längslage (kurze Produktseite in Bewegungsrichtung nach vorn gerichtet) in eine Querorientierung (lange Produktseite nach vorn gerichtet) genutzt.

Der wesentliche Vorteil der Erfindung liegt also in der einfachen Realisierung einer Produktdrehung von einer Längslage in eine Querlage bei sehr hoher Produktgeschwindigkeit.

Es können sowohl sehr flache Produkte wie Napolitains als auch überzogene Produkte sowie Produkte mit einer unebenen Oberseite gedreht werden.

Das beschriebene Verfahren erfolgt sehr produktschonend, sodass es zu keinen Abdrücken auf den empfindlichen Produkten P kommt.

Vorteilhaft gestaltet sich die Umsetzung einer mehrbahnigen Zuführung und Produktdrehung, welche dann lediglich durch mehrteilige Mitnehmer ohne wesentlichen Mehraufwand umsetzbar ist. Der Prozess erfolgt dann in mehreren Produktströmen P1, P2 in Parallelität.

### Bezugszeichenliste

- 1: Vorrichtung
- 2: Ausrichteinrichtung
- 3: Transportband
- 4: Transporteinrichtung (nachgelagert)
- 20: Ausrichteinheit
- 21: Aufnahmeabschnitt
- 22: Abstützabschnitt
- 23: Anlageabschnitt
- 24: Anschlag
- α: Winkel Bewegungsbahn (Ausrichteinrichtung) zu Laufrichtung (Transportband)
- B: Bewegungsbahn (Ausrichteinrichtung)
- F: Querkraftkomponente
- L: Laufrichtung (Transportband)
- M: Moment
- P: Produkt
- P1: Produktstrom 1
- P2: Produktstrom 2
- SP: Schwerpunkt
- vx: Geschwindigkeit (Bewegung) des Produktes in Bewegungsrichtung der Mitnehmer
- vy: Geschwindigkeit des Produktes auf dem Transportband quer zur Produktbewegung (Querbewegung)
- v2: Geschwindigkeit der Ausrichteinrichtung
- v3: Geschwindigkeit des Transportbandes
- v3 (x): Geschwindigkeit des Transportbandes in Bewegungsrichtung der Mitnehmer
- v4: Relativgeschwindigkeit, die auf das Produkt einwirkt (Ursache für die Erzeugung einer Drehbewegung)

## Patentansprüche

1. Verfahren zur Ausrichtung von Produkten (P), wobei die Produkte (P) mit einer Ausrichteinrichtung (2) in wenigstens einem Produktstrom (P1, P2) entlang einer Bewegungsbahn (B) über ein quer dazu laufendes Transportband (3) bewegt werden, sodass ein Drehmoment (M) auf die Produkte (2) wirkt und sich die Ausrichtung der Produkte (P) bezüglich der Bewegungsbahn (B) verändert.

2. Verfahren nach dem vorangehenden Anspruch, **dadurch gekennzeichnet, dass** die Produkte (P) in wenigstens zwei, insbesondere parallelen, Produktströmen (P1, P2) über das Transportband (3) bewegt werden.

3. Verfahren nach einem der vorangehenden Ansprüche, **dadurch gekennzeichnet, dass** die Produkte (P) im Produktstrom (P1, P2) nacheinander einzeln auf das Transportband (3) aufgebracht werden, sodass die Produkte (P) in Kontakt mit dem Transportband (3) gelangen und von diesem mit einer Reibkraft (F) quer zu der Bewegungsbahn (B) beaufschlagt werden.

4. Verfahren nach einem der vorangehenden Ansprüche, **dadurch gekennzeichnet, dass** die Ausrichteinrichtung (2) jedes Produkt (P) beim Überqueren des Transportbandes (3) an einem vom Schwerpunkt (SP) des Produkts (P) versetzen Abschnitt (E), insbesondere an einer Ecke oder Kante des Produkts (P), quer zu der Bewegungsbahn (B) abstützt, sodass sich das Produkt (P) beim Überqueren des Transportbandes (3) um diesen abgestützten Abschnitt (E) dreht und ggf. im Anschluss an die Drehung quer zu der Bewegungsbahn (B) bis in eine Anschlagposition verschoben wird.

5. Verfahren nach einem der vorangehenden Ansprüche, **dadurch gekennzeichnet, dass** jedes Produkt (P) im Vergleich zu dem Zustand vor Überqueren des Transportbandes (3) mit einer bezüglich der Bewegungsbahn (B) veränderten Ausrichtung an eine nachgelagerte Transporteinrichtung (4) übergeben wird, wobei vorzugsweise eine Längsachse des Produkts (P) zunächst entlang der Bewegungsbahn (B) ausgerichtet ist und/oder beim Überqueren des Transportbandes (3) quer, insbesondere senkrecht, zur Bewegungsbahn (B) ausgerichtet wird.

6. Verfahren nach einem der vorangehenden Ansprüche, **dadurch gekennzeichnet, dass** die Ausrichteinrichtung (2) eine maximale Drehung und/oder Verschiebung jedes Produkts (P) beim Überqueren des Transportbandes (3) begrenzt.

7. Verfahren nach einem der vorangehenden Ansprüche, **dadurch gekennzeichnet, dass** jedes Produkt (P) beim Überqueren des Transportbandes (3) um eine senkrecht zur Transportfläche des Transportbandes (3) ausgerichtete Achse gedreht wird, vorzugsweise um 90°.

8. Verfahren nach einem der vorangehenden Ansprüche, **dadurch gekennzeichnet, dass** die Produkte (P) eine ebene, vorzugsweise polygonale, insbesondere rechteckige Grundfläche aufweisen, wobei die Produkte (P) bevorzugt quaderförmig ausgebildet sind.

9. Verfahren nach einem der vorangehenden Ansprüche, **dadurch gekennzeichnet, dass** eine Geschwindigkeit der Ausrichteinrichtung (2) entlang der Bewegungsbahn (B) größer oder kleiner ist als ein Geschwindigkeitsanteil des Transportbandes (3) entlang der Bewegungsbahn (B).

10. Vorrichtung (1) zur Ausrichtung von Produkten (P), umfassend eine Ausrichteinrichtung (2) und ein quer dazu laufendes Transportband (3), wobei die Ausrichteinrichtung (2) ausgebildet ist, um die Produkte (P) in wenigstens einem Produktstrom (P1, P2) entlang einer Bewegungsbahn (B) über das quer dazu laufende Transportband (3) zu bewegen, sodass ein Drehmoment (M) auf die Produkte (2) wirkt und sich die Ausrichtung der Produkte (P) bezüglich der Bewegungsbahn (B) verändert.

11. Vorrichtung (1) nach dem vorangehenden Anspruch, **dadurch gekennzeichnet, dass** die Ausrichteinrichtung (2) eine Vielzahl von entlang der Bewegungsbahn (B) bewegbaren Ausrichteinheiten (20) aufweist, um die Produkte (P) im Produktstrom (P1, P2) nacheinander einzeln über das Transportband (3) zu bewegen.

12. Vorrichtung (1) nach dem vorangehenden Anspruch, **dadurch gekennzeichnet, dass** jede Ausrichteinheit (20) ausgebildet ist, um Produkte (P) aus verschiedenen Produktströmen (P1, P2) beim Überqueren des Transportbandes (3) gleichzeitig auszurichten.

13. Vorrichtung (1) nach einem der beiden vorangehenden Ansprüche, **dadurch gekennzeichnet, dass** jede Ausrichteinheit (20) wenigstens einen der folgenden Abschnitte aufweist:
a. Einen Aufnahmeabschnitt (21), um ein Produkt (P) von einer vorgelagerten Zuführeinrichtung in einer Aufnahmeposition aufzunehmen.
b. Einen Abstützabschnitt (22), um ein Produkt (P) beim Überqueren des Transportbandes (3) an einem vom Schwerpunkt (SP) des Produkts (P) versetzen Abschnitt (E), insbesondere an einer Ecke oder Kante des Produkts (P), quer zu der Bewegungsbahn (B) abzustützen, sodass sich das Produkt (P) beim Überqueren des Transportbandes (3) um diesen abgestützten Abschnitt (E) dreht und ggf. quer zu der Bewegungsbahn (B) bis in eine Anschlagposition verschoben wird.
c. Einen Anlageabschnitt (23), an welchem das Produkt (P) nach abgeschlossener Drehung anliegen kann und quer zu der Bewegungsbahn (B) bis in eine Anschlagposition verschoben werden kann.
d. Einen Anschlag (24), um eine Verschiebung des Produkts (P) quer zu der Bewegungsbahn (B) zu begrenzen.

14. Vorrichtung (1) nach einem der drei vorangehenden Ansprüche, **dadurch gekennzeichnet, dass** ein Winkel (α) zwischen einer Laufrichtung (L) des Transportbandes (3) und der Bewegungsbahn (B) und/oder ein Verhältnis zwischen der Geschwindigkeit des Transportbandes (3) und der Fördergeschwindigkeit der Ausrichteinrichtung (2) verstellbar ist/sind.

15. Vorrichtung (1) nach einem der vier vorangehenden Ansprüche, **dadurch gekennzeichnet, dass** die Ausrichteinheiten (20) kontinuierlich entlang einer umlaufenden Führungsbahn, die abschnittsweise entlang bzw. parallel zur Bewegungsbahn (B) verläuft, bewegbar sind.
